# EUROPEAN PATENT APPLICATION

(11) **EP 4 813 878 A1**
(43) Date of publication of application: **30.09.2026**
(21) Application number: 24893203.0
(22) Date of filing: 01.11.2024
(51) Int. Cl.: B65G 47/90, G21C 19/00

(54) **LIFTING AND TRANSFER DEVICE FOR RADIOACTIVE FILTER ELEMENT**

(30) Priority: 22.11.2023 CN 202311565443
(71) Applicant: China Nuclear Power Technology Research Institute Co., Ltd., Shenzhen, Guangdong 518031 (CN)
(72) Inventor: LIU, Xiajie, Shenzhen, Guangdong 518031 (CN); LIU, Feng, Shenzhen, Guangdong 518031 (CN); LI, Yulong, Shenzhen, Guangdong 518031 (CN); LIN, Youqi, Shenzhen, Guangdong 518031 (CN); KANG, Zheng, Shenzhen, Guangdong 518031 (CN); LI, Chengxin, Shenzhen, Guangdong 518031 (CN); LI, Li, Shenzhen, Guangdong 518031 (CN)
(74) Representative: V.O.
(86) International application number: PCT/CN2024/129253
(87) International publication number: WO 2025/108045

(57) **Abstract**

The present application relates to a lifting and transfer device for a radioactive filter element, the lifting and transfer device including a gripping mechanism, a displacement mechanism and a transfer mechanism. The gripping mechanism includes a swinging assembly, a first rotating assembly and a hook claw, the first rotating assembly being disposed at an end of the swinging assembly, the hook claw being disposed at an end of the first rotating assembly away from the swinging assembly, and the hook claw being configured to grip a filter element handle. The displacement mechanism includes a lifting and lowering assembly, wherein the lifting and lowering assembly is configured to drive the hook claw to ascend and descend, and the gripping mechanism is disposed on the lifting and lowering assembly. The displacement mechanism is disposed on the transfer mechanism, and the transfer mechanism is configured to transfer the filter element. That is, by the lifting or lowering of the lifting and lowering assembly, the swinging of the swinging assembly, and the 360-degree rotation of the rotating assembly, filter elements with different heights and different inclination angles, and filter handles with different orientations can be gripped.

## Description

### CROSS-REFERENCE TO RELATED APPLICATIONS

The present application claims priority to Chinese patent application No. 2023115654430, entitled "Lifting and Transfer Device for Radioactive Filter Element", filed on November 22, 2023, the disclosure of which is hereby incorporated by reference in its entirety.

### TECHNICAL FIELD

The present application relates to the technical field of radioactive waste transfer, in particular to a lifting and transfer device for a radioactive filter element.

### BACKGROUND

The replacement and transfer of radioactive filter elements of filtration devices are usually involved in application sites such as nuclear power plants. As the radioactivity of the radioactive filter element is relatively strong, if no protective measures are taken during the removal and storage process of the waste filter element, the personnel directly approaching and operating the waste filter element would be subject to relatively great radiation hazards.

In related technologies, the lifting and transfer device for the radioactive filter element generally includes a gripping mechanism. The gripping mechanism has a mechanical claw. In actual use, by controlling the gripping mechanism and the mechanical claw, the lifting device grips a handle on the filter element to directly lift the filter element.

However, the mechanical claw usually can only grip a filter element handle arranged along the vertical direction. When the inclination angle of the filter element is different, or the handle is rotated to different orientations, it is difficult for the mechanical claw to grip the filter element flexibly.

### SUMMARY

Based on the above, it is necessary to provide a lifting and transfer device for a radioactive filter element to address the problem that it is difficult for the mechanical claw to grip the filter element flexibly.

A lifting and transfer device for a radioactive filter element is provided, wherein the lifting and transfer device includes:
a gripping mechanism including a swinging assembly, a first rotating assembly and a hook claw, wherein the first rotating assembly is disposed at an end of the swinging assembly, the swinging assembly is configured to change an inclination angle of the first rotating assembly, the hook claw is disposed at an end of the first rotating assembly away from the swinging assembly, the first rotating assembly is configured to drive the hook claw to rotate, and the hook claw is configured to grip a filter element handle;
a displacement mechanism including a lifting and lowering assembly, wherein the gripping mechanism is disposed on the lifting and lowering assembly, and the lifting and lowering assembly is configured to drive the hook claw to ascend and descend; and
a transfer mechanism, wherein the displacement mechanism is disposed on the transfer mechanism, and the transfer mechanism is configured to transfer the filter element.

In an embodiment, the swinging assembly includes:
a support member, an end of which is connected to the lifting and lowering assembly;
a telescopic member, an end of which is rotatably connected to the support member;
a swing arm including a first connection end, a second connection end and a third connection end, which are not collinear, wherein the first connection end is rotatably connected to another end of the telescopic member, the second connection end is rotatably connected to another end of the support member, and the first rotating assembly is disposed at the third connection end.

In an embodiment, the gripping mechanism includes a float joint, and the hook claw is connected to the first rotating assembly through the float joint.

In an embodiment, the displacement mechanism further includes an X-axis moving module and a Y-axis moving module, the X-axis moving module is disposed on the transfer mechanism, the Y-axis moving module is disposed on the X-axis moving module, and the lifting and lowering assembly is disposed on the Y-axis moving module.

In an embodiment, the displacement mechanism further includes a second rotating assembly, the second rotating assembly is disposed on the Y-axis moving module, and the lifting and lowering assembly is disposed on the second rotating assembly.

In an embodiment, the second rotating assembly includes a rotation motor, a turntable and a rotating gear, the rotating gear is connected to a rotating shaft of the rotation motor, the rotating gear is meshed with the turntable, and the turntable has a position-limiting hole formed therein; and
the lifting and lowering assembly includes a lifting and lowering motor, a lifting and lowering shaft, and a lifting and lowering gear; a toothed rack is disposed on the lifting and lowering shaft, the lifting and lowering gear is connected to a rotating shaft of the lifting and lowering motor, the lifting and lowering motor is fixed onto the turntable, the lifting and lowering gear is meshed with the toothed rack, and the lifting and lowering shaft is adapted to with the position limiting hole and is able to move up and down in the position limiting hole.

In an embodiment, the lifting and transfer device includes a transfer container, the transfer container is disposed on the transfer mechanism, the transfer container includes a container body, a container cover, an automatic cover opening mechanism, and a filter element bracket, the filter element bracket is disposed in the container body, and the container cover is covered on the container body by the automatic cover opening mechanism.

In an embodiment, the lifting and transfer device includes a liquid receiving assembly, the liquid receiving assembly includes a swing liquid receiving tray, a fixed liquid receiving tray and a collection pool, the fixed liquid receiving tray is disposed on a peripheral side of the transfer container, and is configured to collect waste liquid during placement of the filter element, an end of the swing liquid receiving tray is rotatably connected to the transfer mechanism and is located on a peripheral side of the gripping mechanism, the swing liquid receiving tray is configured to collect waste liquid when the filter element is lifted, the collection pool has a liquid discharge port, the collection pool is disposed between the swing liquid receiving tray and the fixed liquid receiving tray, and the fixed liquid receiving tray is connected to the collection pool through a pipeline.

In an embodiment, a roller shaft is disposed at another end of the swing liquid receiving tray away from the transfer mechanism, and a roller is sleeved on the roller shaft.

In an embodiment, the lifting and transfer device includes a remote end controller and a monitor, the monitor is disposed on the gripping mechanism, the monitor, the transfer mechanism, the gripping mechanism and the displacement mechanism are respectively communicatively connected with the remote end controller, and the remote end controller is configured to receive information from the monitor, thereby controlling action of the gripping mechanism and the displacement mechanism.

The foregoing description is merely an overview of the technical solutions of this application. Some specific embodiments of this application are described below illustratively to enable a clearer understanding of the technical solutions of this application, enable implementation of the technical solutions based on the subject matter hereof, and make the foregoing and other objectives, features, and advantages of this application more evident and comprehensible.

### BRIEF DESCRIPTION OF THE DRAWINGS

In order to more clearly illustrate the technical solutions in the embodiments of the present application or the prior art, a brief description is given below for the drawings referred in the description of the embodiments or the prior art. Obviously, the drawings in the following description are merely some embodiments of the application. For those of ordinary skill in the art, other drawings can also be obtained based on the disclosed drawings without involving any inventive effort.
FIG. 1 is a schematic structural view of a lifting and transfer device for a radioactive filter element according to an embodiment.
FIG. 2 is a schematic structural view of a lifting and lowering assembly and a second rotating assembly according to an embodiment.
FIG. 3 is a schematic structural view of a gripping mechanism according to an embodiment.

### DETAILED DESCRIPTION

The following clearly and completely describes the technical solutions in the embodiments of the present application with reference to the drawings in the embodiments of the present application. Obviously, the described embodiments are only some, not all, of the embodiments of the present application. Based on the embodiments of the present application, all other embodiments obtained by a person of ordinary skill in the art without involving creative efforts shall fall within the protection scope of the present application.

In the description of the present application, it is to be understood that if the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. appear, they indicate the orientations or positional relationships on the basis of the drawings. These terms are only intended for facilitating illustrating the present application and simplifying the illustration, rather than indicating or implying that the devices or elements referred thereto have to present particular orientations, and be constructed and operated in particular orientations, and therefore cannot be construed as limiting the present disclosure.

In addition, if the terms "first" and "second" appear, they are only intended for illustrative purposes, rather than being construed as indicating or implying relative importance or implicitly designating the number of the technical features as indicated. Thus, the features modified by "first" and "second" may explicitly or implicitly include at least one said feature. In the description of the present application, if the term "a plurality of" appear, it means at least two, for example two or three, unless otherwise explicitly and specifically defined.

In the present application, unless otherwise expressly specified and defined, if the terms "mounted", "connected to", "coupled" and "fixed" appear, they should be understood in a broad sense, for example, fixedly connected or detachably connected, or integrated; mechanically connected or electrically connected; directly connected or indirectly connected through an intermediate medium, or in an interior communication or mutual interaction relationship between two elements, unless otherwise specifically defined. For those of ordinary skill in the art, the specific meanings of the above-described terms in the present application may be understood according to specific circumstances.

In the present application, unless otherwise expressly stated and defined, the first feature, if being referred to as being located "above" or "below" the second feature, may be in direct contact with the second feature, or in indirect contact with the second feature via an intermediate feature. Moreover, the first feature, when being referred to as being disposed "on", "above" and "over" the second feature, may be disposed right above or obliquely above the second feature, or simply disposed at a level higher than the second feature. The first feature, when being referred to as being disposed "under", "below" and "beneath" the second feature, may be disposed directly below or obliquely below the second feature, or simply disposed at a level lower than the second feature.

It should be noted that, if an element is referred to as being "fixed to" or "disposed on" another element, it may be directly on the other element or may also be present with an intermediate element. If an element is referred to as being "connected" to another element, it may be directly connected to the other element or may be present with an intermediate element at the same time. If the terms "vertical", "horizontal", "up", "down", "left", "right" and similar expressions are used herein, they are only for the purpose of illustration, rather than presenting the only ways for implementation.

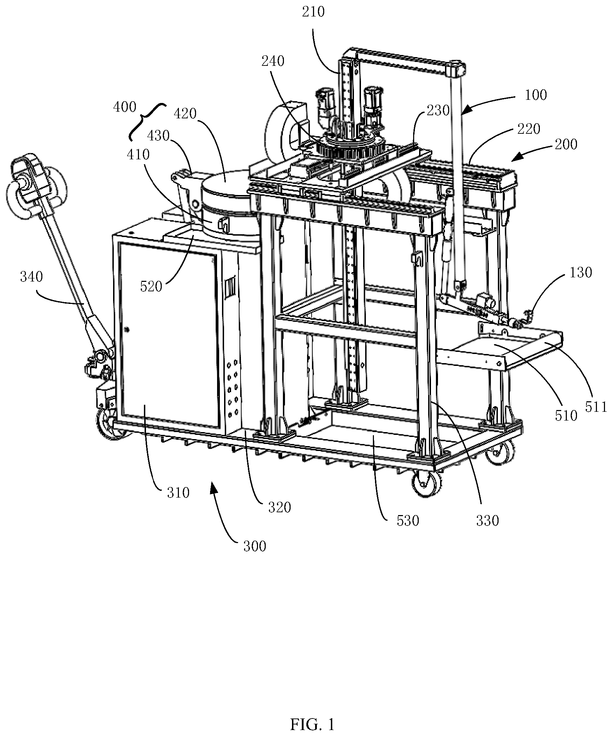

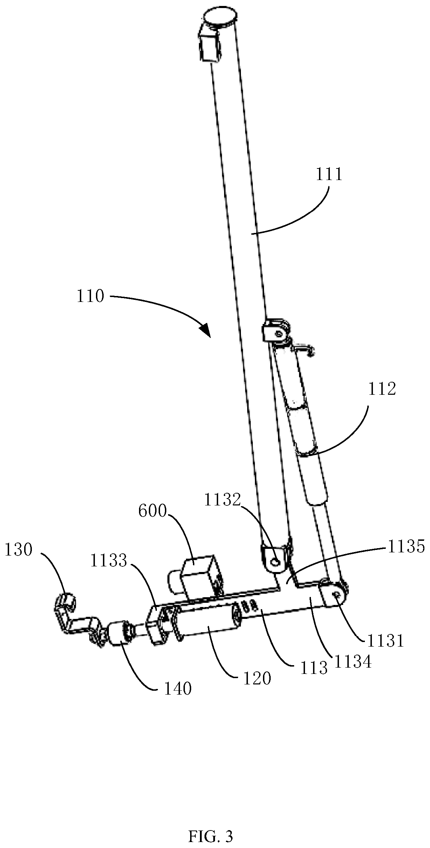

Referring to FIG. 1 and FIG. 3, an embodiment of the present application provides a lifting and transfer device for a radioactive filter element. The lifting and transfer device includes a gripping mechanism 100, a displacement mechanism 200, and a transfer mechanism 300. The gripping mechanism 100 includes a swinging assembly 110, a first rotating assembly 120, and a hook claw 130. The first rotating assembly 120 is disposed at one end of the swinging assembly 110. The swinging assembly 110 is configured to change the inclination angle of the first rotating assembly 120. The hook claw 130 is disposed at an end of the first rotating assembly 120 away from the swinging assembly 110. The first rotating assembly 120 is configured to drive the hook claw 130 to rotate. The hook claw 130 is configured to grip a filter element handle. The displacement mechanism 200 includes a lifting and lowering assembly 210. The gripping mechanism 100 is disposed on the lifting and lowering assembly 210. The lifting and lowering assembly 210 drives the hook claw 130 to ascend and descend. The displacement mechanism 200 is disposed on the transfer mechanism 300. The transfer mechanism 300 is configured to transfer the filter element.

In actual use, firstly, the transfer mechanism 300 drives the displacement mechanism 200 and the gripping mechanism 100 to move to a position close to the filter element. Afterwards, the lifting and lowering assembly 210 drives the hook claw 130 of the gripping mechanism 100 to ascend or descend to the height of the filter element handle. The first rotating assembly 120 is rotated, so that the first rotating assembly 120 drives the hook claw 130 to rotate to align with the direction of the filter element handle. Then the swing mechanism drives the hook claw 130 to swing to adapt the orientation and angle of the filter element handle, so that the filter element handle can be gripped by the hook claw 130. That is, by the lifting or lowering of the lifting and lowering assembly 210, the swinging of the swinging assembly 110, and the 360-degree rotation of the rotating assembly, filter elements with different heights and different inclination angles, and filter handles with different orientations can be gripped.

Further, the swinging assembly 110 includes a support member 111, a telescopic member 112, and a swing arm 113. An end of the support member 111 is connected to the lifting and lowering assembly 210. An end of the telescopic member 112 is rotatably connected to the support member 111. The swing arm 113 includes a first connection end 1131, a second connection end 1132 and a third connection end 1133, which are not collinear. The first connection end 1131 is rotatably connected to another end of the telescopic member 112. The second connection end 1132 is rotatably connected to another end of the support member 111. The first rotating assembly 120 is disposed at the third connection end 1133.

In the present embodiment, the telescopic member 112 can be an electric push rod or a pneumatic telescopic member. The swing arm 113 includes a first rod 1134 and a second rod 1135 connected to the first rod 1134. The first connection end 1131 and the third connection end 1133 are two ends of the first rod 1134. The second rod 1135 is connected between the first connection end 1131 and the third connection end 1133. An end of the second rod 1135 away from the first rod 1134 is the second connection end 1132. When the telescopic member 112 extends or retracts, it can push the first connection end 1131 of the swing arm 113 to move, causing the second connection end 1132 to rotate around the other end of the support member 111, and further causing the third connection end 1133 to drive the hook claw 130 to swing.

Specifically, the gripping mechanism 100 includes a float joint 140 through which the hook claw 130 is connected to the first rotating assembly 120.

In the present embodiment, the hook claw 130 is connected to the first rotating assembly 120 through the float joint 140, and the first rotating assembly 120 is configured to cushion the hard impact of the gripping mechanism 100 on the hook claw 130 when moving.

In some embodiments, the displacement mechanism 200 further includes an X-axis moving module 220 and a Y-axis moving module 230. The X-axis moving module 220 is disposed on the transfer mechanism 300. The Y-axis moving module 230 is disposed on the X-axis moving module 220. The lifting and lowering assembly 210 is disposed on the Y-axis moving module 230.

In the present embodiment, the Y-axis moving module 230 is configured to drive the gripping mechanism 100 to move along the Y-axis by the lifting and lowering assembly 210. The X-axis moving module 220 is configured to drive the gripping mechanism 100 to move along the X-axis by the Y-axis moving module 230 and the lifting and lowering assembly 210. When the transfer mechanism 300 is close to the filter element, the position of the gripping mechanism 100 can be fine-tuned by the Y-axis moving module 230 and the X-axis moving module 220 to facilitate gripping of the filter element.

Specifically, both the Y-axis moving module 230 and the X-axis moving module 220 adopt a configuration of a single-sided module with a guide rail to enhance the movement stability of the Y-axis moving module 230 and the X-axis moving module 220.

Further, the displacement mechanism 200 further includes a second rotating assembly 240. The second rotating assembly 240 is disposed on the Y-axis moving module 230. The lifting and lowering assembly 210 is disposed on the second rotating assembly 240.

Further, by providing the second rotating assembly 240, when the transfer mechanism 300 is close to the filter element, the gripping mechanism 100 can firstly be driven, by the second rotating assembly 240, to rotate to align with the direction of the filter element handle. Then the gripping mechanism 100 can be driven, by the X-axis moving module 220 and the Y-axis moving module 230, to move to the position of the filter element handle.

In actual use, the gripping mechanism 100 is firstly moved to a position close to the filter element by the transfer mechanism 300, and then the position of the gripping mechanism 100 is further adjusted by the displacement mechanism 200, so that the gripping mechanism 100 is further closer to the position of the filter element handle. Finally, the hook claw 110 is precisely adjusted by the swinging assembly 120 and the first rotating assembly 130 to hook the filter element handle.

It should be noted that, in actual use, the specific use sequence of the X-axis moving module 220, the Y-axis moving module 230, the lifting and lowering assembly 210, the second rotating assembly 240, and the gripping mechanism 100 can be adjusted according to actual needs, as long as it is convenient for the hook claw 130 to hook the filter element handle.

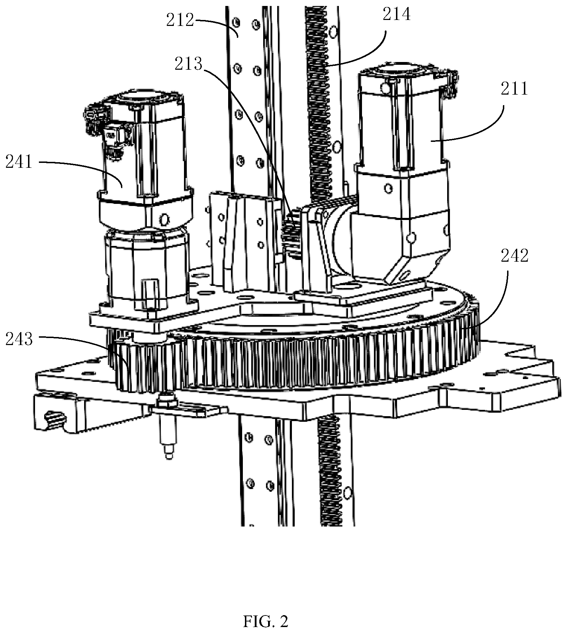

Further, referring to FIG. 2, the second rotating assembly 240 includes a rotation motor 241, a turntable 242, and a rotating gear 243. The rotating gear 243 is connected to a rotating shaft of the rotation motor 241. The rotating gear 243 is meshed with the turntable 242. The turntable 242 has a position-limiting hole formed therein. The lifting and lowering assembly 210 includes a lifting and lowering motor 211, a lifting and lowering shaft 212, and a lifting and lowering gear 213. A toothed rack 214 is disposed on the lifting and lowering shaft 212. The lifting and lowering gear 213 is connected to a rotating shaft of the lifting and lowering motor 211. The lifting and lowering motor 211 is fixed onto the turntable 242. The lifting and lowering gear 213 meshes with the toothed rack 214. The lifting and lowering shaft 212 is adapted to the position-limiting hole and can move up and down in the position-limiting hole.

It should be noted that, the position-limiting hole is a non-circular structure or a circular structure with a keyway. The specific structure of the position-limiting hole is not specifically limited herein, as long as the turntable 212, when rotating, can drive the lifting and lowering shaft 242 to rotate through the position-limiting hole. Meanwhile, in order to further enhance the stability of the lifting and lowering shaft 212, a guide rail extending along the length direction of the lifting and lowering shaft 212 is disposed on the lifting and lowering shaft 212, and a slider is disposed on the turntable 242. The slider cooperates with the guide rail.

The gripping mechanism 100 is connected to the lifting and lowering shaft 212. When the rotation motor 241 rotates, the rotation motor 241 can drive the turntable 242 to rotate through the rotating gear 243. The turntable 242 then drives the lifting and lowering shaft 212 to rotate, which further drives the gripping mechanism 100 to rotate. When the lifting and lowering motor 211 rotates, the lifting and lowering motor 211 can drive the lifting and lowering gear 213 to rotate. The lifting and lowering gear 213 then drives the lifting and lowering shaft 212 to ascend or descend through the toothed rack 214, which finally drives the gripping mechanism 100 to ascend or descend.

Specifically, the gripping mechanism 100 is connected to the lifting and lowering shaft 212 through the support member 111. An adjusting bolt can be disposed on the support member 111, so that the height of the gripping mechanism 100 can be adjusted by loosening the adjusting bolt. That is, the height adjustment range of the hook claw 130 can be further expanded on the basis of the lifting and lowering assembly 210, thereby expanding the gripping range of the filter element. For example, when a filter element on the ground needs to be gripped, the height of the support member 111 can be reduced by manual adjustment of the bolt outside the radiation range in advance. When an underground filter element needs to be gripped, the height of the support member 111 can be increased by manual adjustment of the bolt outside the radiation range in advance.

In some embodiments, referring to FIG. 1, the lifting and transfer device includes a transfer container 400. The transfer container 400 is disposed on the transfer mechanism 300. The transfer container 400 includes a container body 410, a container cover 420, an automatic cover opening mechanism 430, and a filter element bracket (not shown). The filter element bracket is disposed in the container body 410. The container cover 420 is covered on the container body 430 by the automatic cover opening mechanism 410.

In the present embodiment, the transfer container 400 is configured for temporary storage and shielding during the transfer of the filter element. The interior and exterior of the transfer container 400 are made of stainless steel to improve its radiation resistance when in contact with the waste liquid. The automatic cover opening mechanism 430 includes an electric push rod. The container cover 420 is closed or opened by the pushing force of the electric push rod. The filter element bracket is configured to support the filter element and to isolate the filter element from the container body 410. Since the filter element is seriously contaminated, the filter element bracket can prevent direct contact between the filter element and the container body 410, so as to prolong the service life of the transfer container 400. The transfer container 400 can be replaced or cleaned after contamination. The bottom of the transfer container 400 has a liquid discharge port for discharging waste liquid and facilitating the discharge of cleaning liquid. A valve can be disposed at the liquid discharge port to control the opening and closing of the liquid discharge port by controlling the valve.

In some embodiments, the lifting and transfer device includes a liquid receiving assembly 500. The liquid receiving assembly 500 includes a swing liquid receiving tray 510, a fixed liquid receiving tray 520, and a collection pool 530. The fixed liquid receiving tray 520 is disposed on the peripheral side of the transfer container 400, and is configured to collect the waste liquid during placement of the filter element. An end of the swing liquid receiving tray 510 is rotatably connected to the transfer mechanism 300 and is located on the peripheral side of the gripping mechanism 100. The swing liquid receiving tray 510 is configured to collect the waste liquid when the filter element is lifted. The collection pool 530 has a liquid discharge port. The collection pool 530 is disposed between the swing liquid receiving tray 510 and the fixed liquid receiving tray 520. The fixed liquid receiving tray 520 is connected to the collection pool 530 through a pipeline.

Specifically, the transfer mechanism 300 includes a frame chassis 320, an electric control cabinet 310, and a support frame 330. The electric control cabinet 310, the transfer container 400, and the support frame 330 are disposed on the frame chassis 320. The frame chassis 320 is welded and assembled from stainless steel plates. The welding seams are guaranteed to be free of water leakage. The collection pool 530 is disposed on the frame chassis 320. The liquid receiving assembly 500 is configured to collect the waste liquid dripping out of the filter element during lifting and transfer of the filter element. The collected waste liquid is discharged at a designated position to avoid pollution to the environment. An end of the swing liquid receiving tray 510 is rotatably connected to the support frame 330. By rotating the swing liquid receiving tray 510, the waste liquid in the swing liquid receiving tray 510 directly flows into the collection pool 530 from a side of the liquid receiving tray close to the support frame 330. Meanwhile, when collecting the filter element of a underwater purification and filtration device, the swing liquid receiving tray 510 can be rotated so that the swing liquid receiving tray 510 can be withdrawn into the frame cross member of the device. The electric control cabinet 310 is disposed on the peripheral side of the transfer container 400. The fixed liquid receiving tray 520 is fixed on the electric control cabinet 310. The edge of the fixed liquid receiving tray 520 firmly attaches to the transfer container 400. The collection pool 530 is also configured to collect the waste liquid in the transfer container 400. The waste liquid would flow into the collection pool 530 after opening the valve on the transfer container 400. The collected waste liquid in the collection pool 530 is discharged to a designated position.

Hangers are disposed at two ends of the swing liquid receiving tray 510. The swing liquid receiving tray 510 is hung on the support frame 330 through the hangers. The transfer mechanism 300 further includes a motor mounted on the support frame 330. The motor is connected to the hangers and is configured to drive the swing liquid receiving tray 510 to rotate through the hangers. In addition, the swing liquid receiving tray 510 can be connected to the support frame 330 by screws. After the swing liquid receiving tray 510 is rotated to a desired position, the swing liquid receiving tray 510 is connected to the support frame 330 by screws.

Further, a roller shaft is disposed at another end of the swing liquid receiving tray 510 away from the transfer mechanism 300. A roller 511 is sleeved on the roller shaft. The roller 511 provides support for the filter element when the filter element is lifted. Specifically, for some filtration devices obliquely placed with respect to the horizontal plane, when lifting the obliquely placed filter element, the roller can provide some support for the filter element, and can also reduce the friction between the filter element and the swing liquid receiving tray 510 in the lifting process, so as to achieve an effort-saving effect.

In some embodiments, referring to FIG. 3, the lifting and transfer device includes a remote end controller and a monitor 600. The monitor 600 is disposed on the gripping mechanism 100. The monitor 600, the transfer mechanism 300, the gripping mechanism 100, and the displacement mechanism 200 are respectively communicatively connected with the remote end controller. The remote end controller is configured to receive information from the monitor 600, so as to control the action of the gripping mechanism 100 and the displacement mechanism 200.

In the present embodiment, the monitor 600 is a video monitor. The monitor 600 adopts a high-resolution camera. The monitor 600 can collect the image or video of the filter element in real time, obtain the positional relationship between the hook claw 130 and the filter handle, and transfer them to the remote end controller in real time. The operator controls the action of the transfer mechanism 300, the gripping mechanism 100, and the displacement mechanism 200 by observing the image or video, so as to adjust the position and state of the hook claw 130, thereby achieving the purpose of lifting and transferring the filter element.

Further, the remote end controller is also communicatively connected with the automatic cover opening mechanism 430, and is configured to control the opening and closing of the automatic cover opening mechanism 430.

In some embodiments, the transfer mechanism 300 includes an electrically assisted power wheel, a directional wheel, and an operating handle 340. The electrically assisted power wheel is disposed at the front end of the frame chassis 320. The directional wheel is disposed at the rear of the frame chassis 320. The operating handle 340 is disposed at the front end of the frame chassis 320. The rotation of the electrically assisted power wheel can be controlled by the operating handle 340. A brake mechanism can be mounted on the electrically assisted power wheel. An end of the brake mechanism is connected to the operating handle 340. The brake mechanism can be controlled by the operating handle 340. The remote end controller is communicatively connected with the electrically assisted power wheel, and is configured to control the electrically assisted power wheel to drive the frame chassis 320 to move.

The technical features of the embodiments above can be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several implementation modes of the present application, and the description thereof is relatively specific and detailed, but it should not be construed as limiting the scope of the patent. It should be noted that for those skilled in the art, various modifications and improvements may be made without departing from the concept of the present application, and all these modifications and improvements belong to the protection scope of the present application. Therefore, the scope of protection of the patent application should be subject to the appended claims.

## Claims

1. A lifting and transfer device for a radioactive filter element, **characterized in that**, the lifting and transfer device comprises:
a gripping mechanism comprising a swinging assembly, a first rotating assembly and a hook claw, wherein the first rotating assembly is disposed at an end of the swinging assembly, the swinging assembly is configured to change an inclination angle of the first rotating assembly, the hook claw is disposed at an end of the first rotating assembly away from the swinging assembly, the first rotating assembly is configured to drive the hook claw to rotate, and the hook claw is configured to grip a filter element handle;
a displacement mechanism comprising a lifting and lowering assembly, wherein the gripping mechanism is disposed on the lifting and lowering assembly, and the lifting and lowering assembly is configured to drive the hook claw to ascend and descend; and
a transfer mechanism, wherein the displacement mechanism is disposed on the transfer mechanism, and the transfer mechanism is configured to transfer the filter element.

2. The lifting and transfer device for the radioactive filter element according to claim 1, wherein the swinging assembly comprises:
a support member, an end of which is connected to the lifting and lowering assembly;
a telescopic member, an end of which is rotatably connected to the support member;
a swing arm comprising a first connection end, a second connection end, and a third connection end, which are not collinear, wherein the first connection end is rotatably connected to another end of the telescopic member, the second connection end is rotatably connected to another end of the support member, and the first rotating assembly is disposed at the third connection end.

3. The lifting and transfer device for the radioactive filter element according to claim 2, wherein the gripping mechanism comprises a float joint, and the hook claw is connected to the first rotating assembly through the float joint.

4. The lifting and transfer device for the radioactive filter element according to claim 1, wherein the displacement mechanism further comprises an X-axis moving module and a Y-axis moving module, the X-axis moving module is disposed on the transfer mechanism, the Y-axis moving module is disposed on the X-axis moving module, and the lifting and lowering assembly is disposed on the Y-axis moving module.

5. The lifting and transfer device for the radioactive filter element according to claim 4, wherein the displacement mechanism further comprises a second rotating assembly, the second rotating assembly is disposed on the Y-axis moving module, and the lifting and lowering assembly is disposed on the second rotating assembly.

6. The lifting and transfer device for the radioactive filter element according to claim 5, wherein the second rotating assembly comprises a rotation motor, a turntable, and a rotating gear, the rotating gear is connected to a rotating shaft of the rotation motor; the rotating gear is meshed with the turntable, and the turntable has a position limiting hole formed therein; and
the lifting and lowering assembly comprises a lifting and lowering motor, a lifting and lowering shaft, and a lifting and lowering gear; a toothed rack is disposed on the lifting and lowering shaft, the lifting and lowering gear is connected to a rotating shaft of the lifting and lowering motor, the lifting and lowering motor is fixed onto the turntable, the lifting and lowering gear is meshed with the toothed rack, and the lifting and lowering shaft is adapted to the position limiting hole and is able to move up and down in the position limiting hole.

7. The lifting and transfer device for the radioactive filter element according to claim 1, wherein the lifting and transfer device comprises a transfer container, the transfer container is disposed on the transfer mechanism, the transfer container comprises a container body, a container cover, an automatic cover opening mechanism, and a filter element bracket, the filter element bracket is disposed in the container body, and the container cover is covered on the container body by the automatic cover opening mechanism.

8. The lifting and transfer device for the radioactive filter element according to claim 7, wherein the lifting and transfer device comprises a liquid receiving assembly, the liquid receiving assembly comprises a swing liquid receiving tray, a fixed liquid receiving tray, and a collection pool, the fixed liquid receiving tray is disposed on a peripheral side of the transfer container, and is configured to collect waste liquid during placement of the filter element, an end of the swing liquid receiving tray is rotatably connected to the transfer mechanism and is located on a peripheral side of the gripping mechanism, the swing liquid receiving tray is configured to collect waste liquid when the filter element is lifted, the collection pool has a liquid discharge port, the collection pool is disposed between the swing liquid receiving tray and the fixed liquid receiving tray, and the fixed liquid receiving tray is connected to the collection pool through a pipeline.

9. The lifting and transfer device for the radioactive filter element according to claim 8, comprising: a roller shaft disposed at another end of the swing liquid receiving tray away from the transfer mechanism, and a roller sleeved on the roller shaft.

10. The lifting and transfer device for the radioactive filter element according to claim 1, wherein the lifting and transfer device comprises a remote end controller and a monitor, the monitor is disposed on the gripping mechanism, the monitor, the transfer mechanism, the gripping mechanism, and the displacement mechanism are respectively communicatively connected with the remote end controller, and the remote end controller is configured to receive information from the monitor, thereby controlling action of the gripping mechanism and the displacement mechanism.
